# EUROPÄISCHE PATENTSCHRIFT

(11) **EP 3 217 236 B1**
(45) Veröffentlichungstag und Bekanntmachung des Hinweises auf die Patenterteilung: **25.09.2019**
(21) Anmeldenummer: 16159885.9
(22) Anmeldetag: 11.03.2016
(51) Int. Cl.: G05B 19/042

(54) **VERFAHREN UND SYSTEM ZUR GENERIERUNG EINES BEDIENPROGRAMMS IN FORM EINER AUF EINEM MOBILEN GERÄT LAUFFÄHIGEN MOBILEN APPLIKATION**
METHOD AND SYSTEM FOR GENERATING A CONTROL PROGRAM IN THE FORM OF A MOBILE APPLICATION WHICH RUNS ON A MOBILE DEVICE
PROCÉDÉ ET SYSTÈME DE GÉNÉRATION D'UN PROGRAMME DE COMMANDE SOUS FORME D'UNE APPLICATION MOBILE EXÉCUTABLE SUR UN APPAREIL MOBILE

(43) Veröffentlichungstag der Anmeldung: 13.09.2017
(73) Patentinhaber: Schneider Electric Industries SAS, 92500 Rueil-Malmaison (FR)
(72) Erfinder: ZINN, Marcus, 63110 Rodgau (DE); LE SANT, Aurelien, 63741 Aschaffenburg (DE)
(74) Vertreter: Stoffregen, Hans-Herbert

(56) Entgegenhaltungen:
- EP-A1- 2 863 277
- EP-A1- 2 905 946
- DE-A1-102011 080 569

## Beschreibung

Die Erfindung bezieht sich auf ein computerimplementiertes Verfahren zur Bereitstellung eines Bedienprogramms in Form einer auf einem mobilen Gerät lauffähigen mobilen Applikation nach dem Oberbegriff des Anspruchs 1 sowie auf ein Applikations-Generatorsystem zur Durchführung des Verfahrens.

Die DE 10 2011 080 569 A1 betrifft ein System und ein Verfahren zur Bedienung von Feldgeräten in einer Automatisierungsanlage mit einer übergeordneten Steuer-/Bedieneinheit, wobei die übergeordnete Steuer-/Bedieneinheit über ein Kommunikationsnetzwerk auf die Feldgeräte zugreift. Das Kommunikationsnetzwerk weist auf der Steuer-/Bedieneinheit ein erstes Bussystem mit einem ersten Übertragungsprotokoll und auf der Feldebene ein zweites Bussystem mit einem zweiten Übertragungsprotokoll auf. Die Umsetzung der beiden Übertragungsprotokolle erfolgt mit einem Gateway, wobei in dem Gateway eine Grundsoftware vorgesehen ist, die bei Auftreten eines Ereignisses mittels Suchlaufs die auf der Feldebene angeordneten Feldgeräte ermittelt und die ermittelte Information über die Feldgeräte nutzt, um die entsprechenden elektronischen Gerätebeschreibungen von einem Applikation-Server, in dem Server-Apps vorgehalten werden, herunterzuladen und der Steuer-/Bedieneinheit zur Bedienung der Feldgeräte zur Verfügung zu stellen.

Nachfolgend wird unter einer mobilen Applikation, auch als mobile App oder kurz App bezeichnet, eine Software-Applikation verstanden, die entwickelt wird, um auf einem mobilen Gerät wie z.B. Smartphone oder Tablett-Computer zu laufen. Mobile Applikationen werden meist in sogenannten App-Stores angeboten, die üblicherweise vom Provider des Betriebssystems der mobilen Plattformen, wie z.B. Apple® oder Google®, betrieben werden.

Die Entwicklung einer mobilen Applikation umfasst ein Verfahren, das eine Applikations-Software für mobile Geräte liefert. Die mobilen Applikationen können entweder nach der Generierung auf dem mobilen Gerät vorinstalliert oder von dem Anwender aus einem App-Store auf das mobile Gerät geladen werden.

In Bereichen wie Maschinenbau oder Automatisierungstechnik besteht für Erstausrüster (Original Equipment Manufacturer, OEM) zunehmend das Bedürfnis, für Anwender von Maschinen und Anlagen eine mobile Applikation zur Bedienung eines die Maschine oder Anlage steuernden Automatisierungsgerätes bereitzustellen. Die mobile Applikation kann entweder vom Erstausrüster selbst oder von einer beauftragten Firma erstellt werden. Auch besteht die Möglichkeit, bei dem Hersteller des Automatisierungsgerätes anzufragen, ob bereits eine mobile Applikation existiert oder ob diese von dem Hersteller hergestellt werden kann.

Die manuelle Generierung einer mobilen Applikation ist einerseits kosten- und zeitintensiv und erfordert andererseits ein hohes Maß an speziellem Wissen über die Entwicklung mobiler Applikationen und deren Standards sowie Wissen über technologische Aspekte der Automatisierungsgeräte und der auf diesen laufenden Anwendungs-Programmen.

Nach dem Stand der Technik werden mobile Applikationen entweder manuell oder mittels eines Applikations-Generators erzeugt. Applikations-Generatoren für mobile Applikationen sind bisher jedoch nicht in der Lage, mobile Applikationen zur Steuerung, Überwachung oder Diagnose von Automatisierungsgeräten weitgehend automatisch zu erzeugen. Unabhängig davon nutzen Applikations-Generatoren nach dem Stand der Technik zur Erzeugung der mobilen Applikation nicht die existierenden Anwendungs-Beschreibungen der auf den Automatisierungsgeräten laufenden Anwendungs-Programme.

Die EP 2 905 946 A1 bezieht sich auf einen Sensor mit einer Steuer- und Auswerteeinheit und einer Speichereinheit, wobei ein Anwendungsprogramm zur Parametrierung und/oder Diagnose für den Sensor vorgesehen ist, wobei auf der Speichereinheit eine HTML-Beschreibung gespeichert ist, wobei die HTML-Beschreibung einen Urlademechanismus enthält, wobei der Urlademechanismus dazu ausgebildet ist, das Anwendungsprogramm in einem Browser auf ein Endgerät zu übertragen und das Anwendungsprogramm in dem Browser startbar ist.

Die EP 2 863 277 A1 betrifft ein Verfahren zur Offline-Gerätesimulation eines Feldgerätes, bei der zumindest ein Parameter des Feldgerätes visualisiert und eine Parametrisierung des Feldgerätes ermöglicht wird und die Gerätesimulation auf der Grundlage einer Gerätebeschreibungsdatei generiert wird und wobei die Gerätesimulation in einem Browser ausgeführt wird.

In der WO 2013/134674 A1 ist ein Verfahren und ein System zum automatischen Generieren einer mobilen Applikation beschrieben. Das System ist ausgebildet, um eine Anfrage zur Erzeugung einer mobilen Applikation zu bearbeiten, wobei die Anfrage Provider-spezifische Informationen betreffend die Applikation und Provider-spezifische Inhalte für die mobile Applikation umfasst.

Durch ein Verarbeitungsgerät wird eine Beschreibung der mobilen Applikation (Applikations-Beschreibung) basierend auf der Provider-spezifischen Applikations-Information generiert, wobei die Applikations-Beschreibung ein Skelett aus einem oder mehreren Applikations-Merkmalen umfasst, das von der mobilen Applikation zu implementieren ist. Das Verarbeitungsgerät startet den Generierungsvorgang mit einer mobilen Basis-Applikation, die in einem Datenspeicher verfügbar ist. Die mobile Basis-Applikation umfasst zuvor generierte Basis-Applikations-Softwarecodes. Sodann wird durch das Verarbeitungsgerät die mobile Basis-Applikation im Hinblick auf die Applikations-Beschreibung modifiziert und anschließend wird durch das Verarbeitungsgerät ein binärer mobiler Applikationscode für die mobile Applikation im Hinblick auf die modifizierte mobile Basis-Applikation generiert.

Davon ausgehend liegt der vorliegenden Erfindung die Aufgabe zu Grunde, ein Verfahren und ein System der eingangs genannten Art derart weiterzubilden, um eine kosten- und zeiteffektive Generierung einer mobilen Applikation zur Bedienung, Kontrolle und Diagnose eines Automatisierungsgerätes zu ermöglichen, ohne das dazu spezielle Kenntnisse des Automatisierungsgerätes sowie über die Entwicklung mobiler Applikationen erforderlich sind.

Die Aufgabe wird erfindungsgemäß unter anderem durch die Merkmale des Anspruchs 1 gelöst.

Die mobile Applikation wird auf Basis einer Anwendungs-Beschreibung des auf dem Automatisierungsgerät ablaufenden Anwendungs-Programms generiert.

Die Anwendungs-Beschreibung des Anwendungs-Programms wird in ein Applikations-Generatorsystem geladen und hinsichtlich ihrer Struktur und ihres Inhalts analysiert und in Segmente zerlegt. Aus den Segmenten der Anwendungs-Beschreibung werden Komponenten-Beschreibungen erzeugt und diejenigen Komponenten-Beschreibungen durch einen Anwender ausgewählt, die für die Interaktion der mobilen Applikation mit dem auf dem Automatisierungsgerät laufenden Anwendungs-Programm erforderlich sind..

Die Komponenten-Beschreibungen werden hinsichtlich notwendiger anwendungsspezifischer Software-Artefakte wie existierende Objekte, existierende Module, existierende Komponenten oder existierende Services und/oder notwendiger mobilgerätespezifischer Software-Artefakte wie Deployment-Regeln oder Abhängigkeiten analysiert. Die notwendigen anwendungsspezifischen Software-Artefakte und/oder mobilgerätespezifischen Software-Artefakte werden ausgewählt und aus einem Datenspeicher geladen. Aus den notwendigen anwendungsspezifischen Software-Artefakten und/oder den mobilgerätespezifischen Software-Artefakten werden Applikations-Komponenten erzeugt und aus den Applikations-Komponenten wird ein ausführbarer Source-Code für die mobile Applikation generiert.

Als besonders vorteilhaft hat sich erwiesen, dass bei der Analyse der Anwendungs-Beschreibung eine Applikations-Struktur der mobilen Applikation, ein Applikations-Typ eine Applikations-Umgebung und/oder Linker-Details abgeleitet werden, wobei aus der Applikations-Struktur ein zunächst leeres Applikations-Skelett erzeugt wird und dass in Abhängigkeit des Applikations-Skeletts und den Komponenten-Beschreibungen Konfigurations-Dateien für die Applikations-Komponenten erzeugt werden.

Da die Anwendungs-Beschreibung bereits sämtliche Informationen betreffend User Interface, Daten, Funktionen und Strukturen des Anwendungs-Programms enthält, kann die mobile Applikation des Automatisierungsgerätes ohne weitere Mitwirkung des Anwenders in kurzer Zeit und weitgehend automatisch generiert werden.

Des Weiteren ist gemäß der Erfindung vorgesehen, dass der ausführbare Code der mobilen Applikation durch Verlinken der Applikations-Komponenten mit dem Applikations-Skelett erzeugt wird.

Gemäß eines bevorzugten Verfahrens ist vorgesehen, dass bei der Generierung der mobilen Applikation anwenderspezifische Informationen wie Firmenidentität, Herstellername oder Anwendername und/oder mobilgerätespezifische Informationen, wie Angaben zur Hardware oder dem mobilen Betriebssystem durch eine Eingabeaufforderung abgefragt oder aus der Anwendungs-Beschreibung oder aus dem mobilen Gerät bei Verbindung mit dem Applikations-Generatorsystem ausgelesen werden. Dadurch ist es möglich, die mobile Applikation gemäß den Anforderungen des Erstausrüsters oder des Anwenders auszugestalten.

Gemäß einer weiteren bevorzugten Verfahrensweise ist vorgesehen, dass nach dem Verfahrensschritt der Analyse der Anwendungs-Beschreibung diejenigen Komponenten-Beschreibungen durch den Anwender ausgewählt werden, durch die User Interfaces, Funktionen, Daten und/oder Strukturen beschrieben werden, auf die mit Hilfe der mobilen Applikation eingewirkt werden soll. Somit ist der Anwender in der Lage, die für ihn relevanten Funktionen des Anwendungs-Programms auszuwählen und damit die mobile Applikation an seine Anforderungen anzupassen.

Vorzugsweise umfassen die Komponenten-Beschreibungen zumindest eine User-Interface-Komponenten-Beschreibung, eine Daten-Komponenten-Beschreibung, eine Funktions-Komponenten-Beschreibung sowie eine Struktur-Komponenten-Beschreibung. Die Komponenten-Beschreibungen ergeben sich aus der Analyse der Anwendung-Beschreibung, so dass die in der Anwendungs-Beschreibung definierten User-Interfaces, Daten, Funktionen und Strukturen durch die mobile Applikation in anwenderspezifischer Weise abgebildet werden können.

Die Applikations-Beschreibung ist vorzugsweise eine XML-Beschreibung. Unabhängig davon können aber auch andere Beschreibungs-Formate verwendet werden.

Die Erfindung bezieht sich des Weiteren auf ein Applikations-Generatorsystem zur Bereitstellung eines Bedienprogramms in Form einer auf einem mobilen Gerät lauffähigen mobilen Applikationen zur Interaktion wie Bedienung, Überwachung, Konfiguration und / oder Diagnose mit einem Anwendungs-Programm eines Automatisierungsgerätes zur Steuerung und/oder Überwachung einer Maschine oder Anlage.

Das Applikations-Generatorsystem ist erfindungsgemäß dazu eingerichtet, dass zuvor erläuterte Verfahren auszuführen.

Das Applikations-Generatorsystem umfasst ein Code-Generatorsystem mit zumindest einem Transformations-Tool zur Transformation einer Anwendungs-Beschreibung des Anwendungs-Programms des Automatisierungsgerätes in Applikations-Komponenten und einen Applikations-Generator zur Generierung der mobilen Applikation auf der Basis der Applikations-Komponenten.

Das Code-Generatorsystem umfasst ein erstes Transformations-Tool zur Transformation der Anwendungs-Beschreibung des Anwendungs-Programms in eine oder mehrere Komponenten-Beschreibungen sowie ein zweites Transformations-Tool zur Transformation der Komponenten-Beschreibungen unter Berücksichtigung anwendungsspezifischer Software-Artefakte und/oder mobilegerätespezifischer Software-Artefakte in die Applikations-Komponenten.

Ferner umfasst das erste Transformations-Tool ein Analyse-Modul zur Analyse einer Struktur und eines Inhalts der Anwendungs-Beschreibung und Zerlegung der Anwendungs-Beschreibung in Segmente sowie einen Komponenten-Beschreibungs-Erzeuger zur Erzeugung der Komponenten-Beschreibungen aus den Segmenten , wobei die Komponenten-Beschreibungen zumindest eine User-Interface-Komponenten-Beschreibung, eine Daten-Komponenten-Beschreibung, eine Funktions-Komponenten-Beschreibung sowie eine Struktur-Komponenten-Beschreibung umfassen.

Das erste Transformations-Tool weist zudem ein Auswahl-/Lade-Modul zur Auswahl und/oder zum Laden externer anwenderspezifischer Informationen und/oder mobilgerätespezifischer Informationen sowie zur Auswahl und/oder zum Laden von anwendungsspezifischen Software-Artefakten sowie mobilegerätespezifischen Software-Artefakten aus einer Datenbank auf. Somit können bereits existierende Komponenten-Beschreibungen aus externen Datenspeichern geladen werden.

Zudem ist vorgesehen, dass das zweite Transformations-Tool umfasst: ein Analyse-Modul zur Analyse der benötigten Komponenten-Beschreibungen hinsichtlich existierender anwenderspezifischer Software-Artefakt sowie mobilgerätespezifischer Software-Artefakte sowie ein Auswahl-/Lade-Modul zur Auswahl und zum Laden notwendiger anwendungsspezifischer Software-Artefakte sowie mobilegerätespezifischer Software-Artefakte aus dem zumindest einen Datenspeicher.

Zur Generierung eines ausführbaren Applikations-Codes der mobilen Applikation weist der Applikations-Generator einen Applikations-Skelett-Generator, einen Konfigurations-Datei-Generator sowie ein Linker-Modul auf, wobei der Applikations-Skelett-Generator aus einer aus der Anwendungs-Beschreibung abgeleiteten Applikations-Struktur ein zunächst leeres Applikations-Skelett erzeugt, der Konfigurations-Datei-Generator aus den Komponenten-Beschreibungen in Verbindung mit dem Applikations-Skelett Konfigurations-Dateien für die Applikations-Komponenten erzeugt und wobei das Linker-Modul die konfigurierten Applikations-Komponenten mit dem Applikations-Skelett zur Erzeugung des ausführbaren Codes der mobilen Applikation (MAPP) verlinkt
Das mobile Gerät ist vorzugsweise ein intelligentes Gerät (Smart Device) wie z.B. Smartphone oder Tablett-Computer.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung eines den Figuren zu entnehmenden bevorzugten Ausführungsbeispiels.

Es zeigen:
- Fig. 1:: eine schematische Darstellung eines Systems zur Generierung einer mobilen Applikation,
- Fig. 2:: eine schematische Darstellung eines Code-Generatorsystems,
- Fig. 3:: ein schematischer Verfahrensablauf zur Generierung einer mobilen Applikation, und
- Fig. 4:: eine schematische Darstellung eines Komponenten-Linker-Systems.

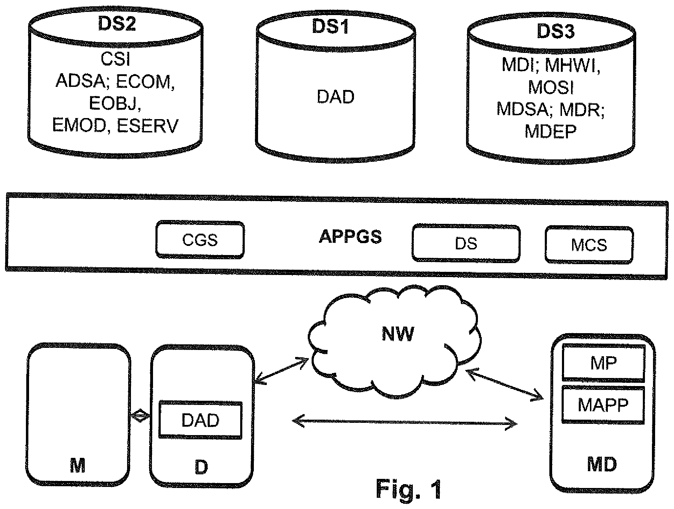

Fig. 1 zeigt ein System zur Generierung eines Bedienprogramms in Form einer auf einem mobilen Gerät MD lauffähigen mobilen Applikation MAPP zum Schreiben und Lesen von Daten in einem oder aus einem in einem Automatisierungsgerät D ablaufenden Anwendungs-Programm DA zur Steuerung einer Maschine M. Gemäß der Erfindung ist vorgesehen, dass die mobile Applikation MAPP durch automatische Transformation einer Anwendungs-Beschreibung DAD des Anwendungs-Programms DA mittels eines Applikations-Generatorsystems APPGS unter Einbeziehung von anwenderspezifischen und/oder mobilgerätespezifischen Eingabeinformationen CSI, MDI und existierenden Software-Artefakten ADSA, MDSA generiert wird.

Die Anwendungs-Beschreibung DAD, vorzugsweise ein XML-Dokument, ist in einem Datenspeicher DS1 gespeichert und umfasst einen obligatorischen Teil in Form eines Dokumentes der Anwendungs-Beschreibung DAD sowie einen optionalen Teil in Form einer anwenderspezifischen Beschreibung. Die anwenderspezifische Beschreibung verfeinert die Anwendungs-Beschreibung DAD z.B. durch spezifische Parameter, um die mobile Applikation besser an die Anforderungen des Anwenders oder Erstausrüsters anpassen zu können.

Zur Generierung der mobilen Applikation MAPP sind neben der Anwendungs-Beschreibung DAD die Eingabeinformationen CSI, MDI sowie die existierenden Software-Artefakte ADSA, MDSA notwendig, die in Datenspeichern DS2, DS3 abrufbar sind.

Typische anwenderspezifische Informationen CSI betreffen z.B. die Firmenidentität (Corporate Identity) sowie Namen von und Informationen über spezifische Anwender, um eine mobile Applikation anwenderspezifisch auszugestalten. Die anwenderspezifischen Informationen werden während der automatischen Generierung der mobilen Applikation von dem Anwender abgefragt oder automatisch aus einem Datenspeicher abgerufen.

Die mobilgerätespezifischen Informationen MDI betreffen die mobile Plattform MP, auf der die mobile Applikation MAPP ablaufen soll. Diese Informationen umfassen Informationen über die Hardware MHWI der mobilen Plattform wie z.B. Hardware-Versionsnummer, Hardware-Typ und Hardware-Eigenschaften. Ergänzend sind Informationen über das Betriebssystem MOSI der mobilen Plattform notwendig. Die mobilgerätespezifischen Informationen MDI werden von dem Anwender vorgegeben oder aus dem mobilen Gerät MD ausgelesen, wenn dieses mit dem Applikations-Generatorsystem zur Ausführung eines Generierungsauftrags gekoppelt wird.

Die Software-Artefakte umfassen anwendungsspezifische Software-Artefakte ADSA in Form von existierenden Objekten EOBJ, Modulen EMOD, Komponenten ECOM sowie Services ESERV. Die anwendungsspezifischen Software-Artefakte ADSA werden bei Ablauf des Verfahrens aus einem der Datenspeicher D1, D2 geladen. Ferner umfassen die Software-Artefakte mobilgerätespezifische Software-Artefakte MDSA in Form von Deployment-Regeln MDR und Abhängigkeiten MDEP zwischen der zu erstellenden mobilen Applikation und dem Betriebssystem sowie der Hardware des mobilen Gerätes.

Das Applikations-Generatorsystem APPGS umfasst ein Code-Generatorsystem CGS, ein Deployment-System DS sowie ein Steuerungssystem MCS.

Das Deployment-System DS liefert Informationen und Code-Artefakte, nämlich Sicherheitsinformationen, wie z.B. Zertifikate, Betriebssystem-Deployment-Informationen wie z.B. Deployment-Verfahrens-Artefakte für Apple®-Geräte sowie Hardware-Deployment-Informationen wie z.B. Geräte-Informationen für Samsung®-Geräte.

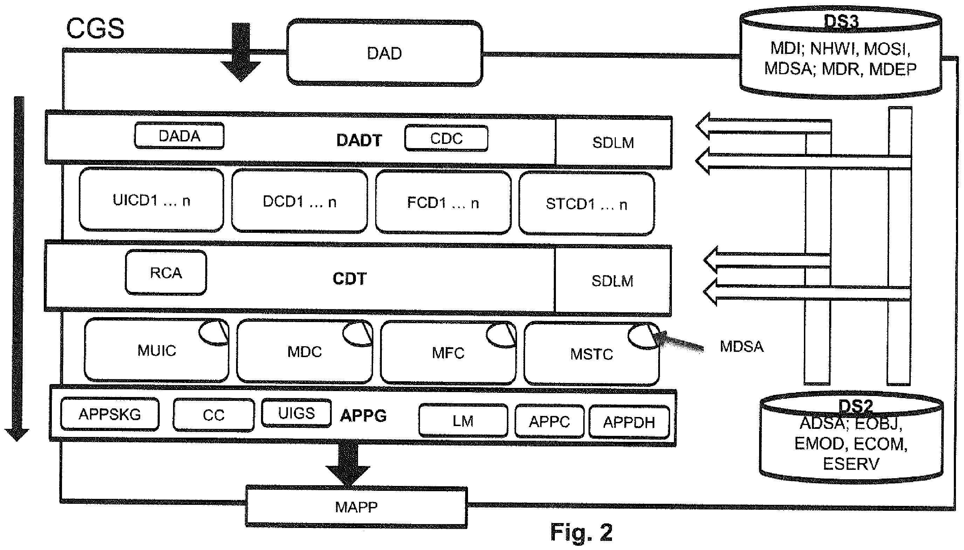

Fig. 2 zeigt ein Blockschaltbild des Code-Generatorsystems CGS. Das Code-Generatorsystem CGS umfasst ein Transformations-Tool DADT zur Transformation der Anwendungs-Beschreibung DAD in eine oder mehrere Komponenten-Beschreibungen UICD1 ...UICDn, DCD1...UICDn, FCD1...FCDn, STCD1...STCDn.

Zur Analyse einer Struktur sowie von Inhalten der Anwendungs-Beschreibung weist das Transformations-Tool DADT ein Analysator-Modul DADA auf. Das Analysator-Modul DADA zerlegt die Anwendungs-Beschreibung DAD in Segmente wie z.B. Eingabe-Aufforderungen und Anzeige-Informationen, um User-Interface-Informationen zu erhalten. Ferner werden mittels des Analysator-Moduls eine Applikations-Struktur, ein Applikations-Typ, eine Applikations-Umgebung sowie Linker-Details bestimmt.

Zur Erzeugung der Komponenten-Beschreibungen UICD, DCD, FCD, STCD aus den von dem Analysator-Modul bereitgestellten Informationen umfasst das Transformations-Tool DADT einen Komponenten-Beschreibungs-Erzeuger CDC, der aus den Segmenten die für das Verfahren der Applikationsgenerierung notwendigen Komponenten-Beschreibungen erzeugt, umfassend zumindest eine Komponenten-Beschreibung UICD mit User-Interface-Informationen, zumindest eine Komponenten-Beschreibung DCD mit Daten-Informationen, zumindest eine Komponenten-Beschreibung FCD mit Funktions-Informationen und zumindest eine Komponenten-Beschreibung STCD mit Struktur-Informationen der Anwendungs-Beschreibung DAD. Die Erzeugung der Komponenten-Beschreibungen erfolgt unter Berücksichtigung der anwenderspezifischen Informationen, mobilgerätespezifischen Informationen sowie der anwendungsspezifischen und mobilgerätespezifischen Software-Artefakte.

Das Transformator-Tool DADT hat über das Auswahl-/Lade-Modul SDLM Zugriff auf die Datenspeicher DS2, DS3, und lädt automatisch die für die Erzeugung der Dokumenten-Beschreibungen notwendigen Informationen und Software-Artefakte. Die gewünschten Funktionen der mobilen Applikation können vom Anwender durch Auswahl entsprechender Segmente oder Komponenten-Beschreibungen ausgewählt werden.

Die durch das Transformator-Tool DADT aus der Anwendungs-Beschreibung DAD erzeugten Komponenten-Beschreibungen UICD, DCD, FCD, STCD werden mittels eines zweiten Transformations-Tools CDT in Applikations-Komponenten MUID, MDC, MFC, MSTC für die mobile Applikation MAPP transformiert.

Die Komponenten-Beschreibungen UICD, DCD, FCD, STCD werden mittels eines Analyse-Moduls RCA hinsichtlich notwendiger anwendungsspezifischer Software-Artefakte und notwendiger mobilgerätespezifischer Software-Artefakte analysiert. Benötigte Software-Artefakte werden durch ein Auswahl-/Lade-Modul SDLM ausgewählt und aus dem Datenspeicher DS2, DS3 geladen.

Die Applikations-Komponenten umfassen rein beispielhaft eine User-Interface-Komponente MUIC, eine Daten-Komponente MDC, eine Funktions-Komponente MFC sowie eine Struktur-Komponente MSTC. Die Applikations-Komponenten MUIC, MDC, MFC sowie MSTC, die aus der Analyse der Struktur und des Inhalts der Anwendungs-Beschreibung unter Berücksichtigung der anwendungsspezifischen Software-Artefakte sowie mobilgerätespezifischer Software-Artefakte erzeugt wurden, bilden die Grundlage für die Erzeugung der mobilen Applikation MAPP mittels des Applikations-Generators APPG. Die Applikations-Komponenten umfassen Software-Artefakte, die beispielsweise aus externen Datenspeichern geladen und durch Konfigurationsdaten an den konkreten Bedarf der mobilen Applikation angepasst bzw. ausgeprägt werden.

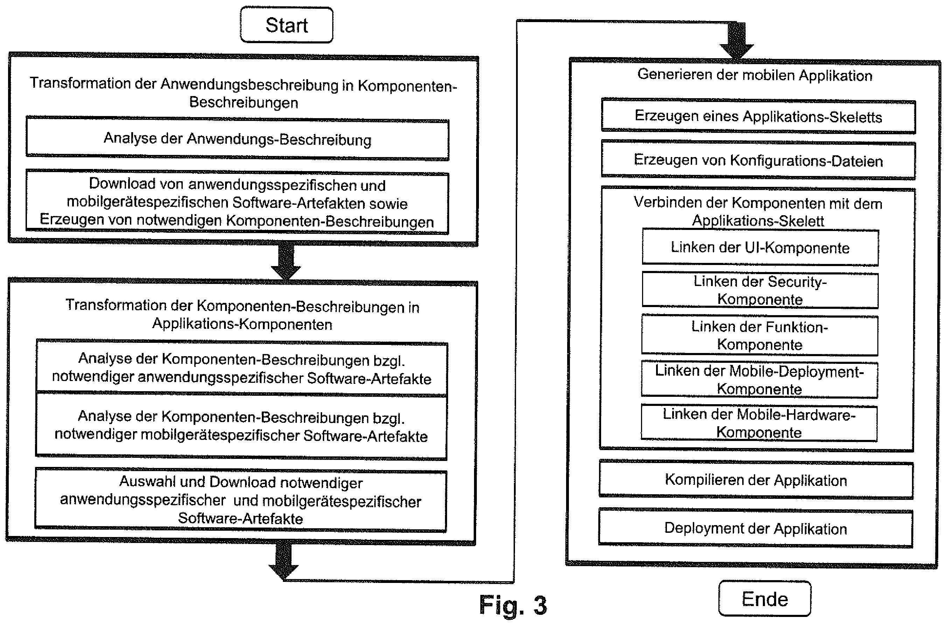

Fig. 3 zeigt ein Ablaufdiagramm des erfindungsgemäßen Verfahrens. Die Anwendungs-Beschreibung DAD wird in dem ersten Transformations-Tool DADT in die notwendigen Komponenten-Beschreibungen UICD, DCD, FCD sowie STCD transformiert. Hierzu erfolgt zunächst eine Analyse der Struktur und des Inhalts der Anwendungs-Beschreibung DAD durch das Analysator-Modul DADA. Die Anwendungs-Beschreibung DAD wird wie zuvor beschrieben in Segmente zerlegt. Ferner werden eine Applikations-Struktur, ein Applikations-Typ, eine Applikations-Umgebung für die mobile Applikation sowie Linker-Details erzeugt.

Unter Berücksichtigung der ladbaren existierenden anwendungsspezifischen Software-Artefakte EOBJ, EMOD, ECOM, ESERV, der mobilgerätespezifischen Software-Artefakte sowie ggf. einer Auswahl von Segmenten durch den Anwender werden in einem nächsten Schritt aus den ausgewählten Segmenten die notwendigen Komponenten-Beschreibungen UICD, DCD, FCD sowie STCD erzeugt. Dabei handelt es sich um High-Level-Beschreibungen von oder für Applikations-Komponenten, die für die Generierung benötigt werden. Eine Applikations-Komponente kann z.B. eine "TCP-Kommunikations-Komponente" sein.

Durch das zweite Transformations-Tool CDT werden die notwendigen Komponenten-Beschreibungen in Applikations-Komponenten MUIC, MDC, MFC, MSTC transformiert. Zunächst werden die notwendigen Komponenten hinsichtlich anwendungsspezifischer und mobilgerätespezifischer Software-Artefakte analysiert, wodurch eine Liste von existierenden Software-Artefakten erzeugt wird, welche die allgemeinen Anforderungen der Applikations-Beschreibung erfüllen. Eine allgemeine Anforderung kann z.B. die Beschreibung "MODBUS-TCP PORT 2003" in der Anwendungs-Beschreibung sein, aus der zu entnehmen ist, dass eine Komponente benötigt wird, die "MODBUS-TCP" spricht und eine Verbindung zu dem "Port 2003" bereitstellen kann. Da ein mobiles Gerät üblicherweise eine Funkkommunikationsschnittstelle aufweist, muss ein mobilgerätespezifisches Software-Artefakt geladen oder erzeugt werden, welches die Funktionen "MODBUS-TCP PORT 2003" und "Funkkommunikation" erfüllt. Dies kann z.B. eine "Modbus-TCP.JAR"-Komponente sein, die aus einem Datenspeicher abrufbar ist.

In einem weiteren Schritt wird auf der Grundlage der Liste der existierenden mobilegerätespezifischen Software-Artefakte und der existierenden anwendungsspezifischen Software-Artefakte, welche die Anforderungen der Anwendungs-Beschreibung sowie des mobilen Gerätes erfüllen, eine Auswahl der benötigten Software-Artefakten vorgenommen und ein Download der ausgewählten Software-Artefakten durchgeführt. Die Applikations-Komponenten werden aus den Komponenten-Beschreibungen und/oder den Software-Artefakten unter Berücksichtigung von Konfigurations-Dateien und/oder von Software-Anpassungen gebildet, die in dem Transformator-Tool automatisch generiert werden.

In einem weiteren Verfahrensschritt wird vorzugsweise in dem Applikations-Generator APPG aus der Applikations-Struktur ein zunächst leeres Applikations-Skelett erzeugt. Aus dem Applikations-Skelett und den Segmenten der Anwendungs-Beschreibung werden in einem Komponenten-Konfigurator CC Konfigurations-Dateien für die benötigten Applikations-Komponenten erzeugt.

Mit Hilfe eines Linker-Moduls LM werden die mit den Konfigurations-Dateien konfigurierten Applikations-Komponenten mit dem leeren Applikations-Skelett verlinkt.

Das erzeugte erweiterte Applikations-Skelett EAPPSK, welches einem vollständigen Quellcode einer mobilen Applikation entspricht, wird sodann unter Berücksichtigung des zuvor erzeugten Applikations-Typs und der Applikations-Umgebung mittels eines Compilers APPC kompiliert, um eine kompilierte mobile Applikation CAPP zu erhalten.

Die kompilierte mobile Applikation CAPP wird unter Berücksichtigung des Applikations-Typs sowie der Applikations-Umgebung mittels eines Deployment-Tools APPDH zum Download bereitgestellt. Die mobile Applikation MAPP ist damit für ein mobilgerätespezifisches Betriebssystem und einen entsprechenden Applikations-Store kompatibel ausgebildet.

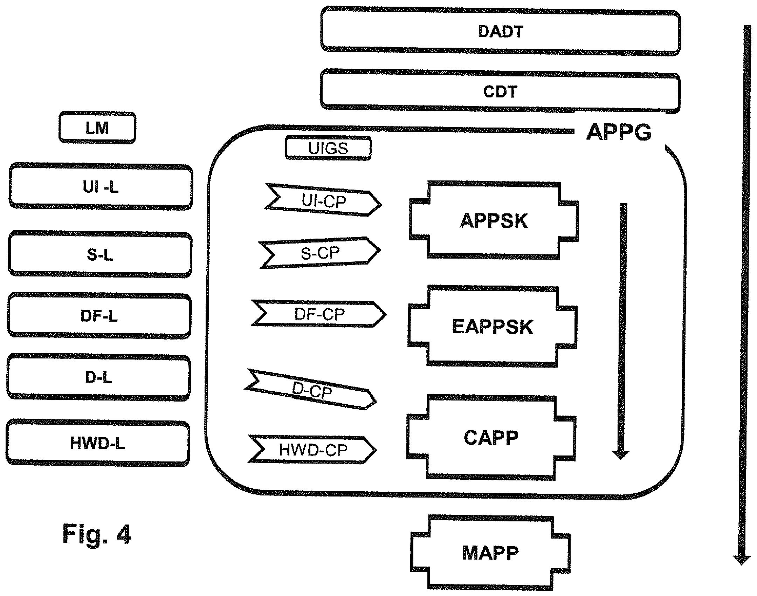

Fig. 4 zeigt eine detaillierte Darstellung des Applikations-Generators APPG. Das Transformations-Tool CDT ist ausgebildet, um aus den aus der Analyse resultierenden Komponenten-Beschreibungen einen Applikationscode zu erzeugen. Der Applikationscode umfasst neben einer Business-Logik auch Funktionen und sogenannte Verbindungspunkte CP. Die Verbindungspunkte CP sind notwendig, um das in dem Applikations-Generator APPG erzeugte Applikations-Skelett APPSK mit verschiedenen Software-Artefakten bzw. Komponenten wie z.B. Sicherheits-Komponenten, Deployment-Komponenten, Hardware-Abhängigkeits-Komponenten, Gerätefunktionen sowie User-Interfaces zu verlinken. Die Sicherheits-Komponenten, Deployment-Komponenten, Hardware-Abhängigkeits-Komponenten, Gerätefunktionen und/oder User-Interfaces sind Add-ons, die die Applikations-Beschreibungen MUIC, MDC, MFC ergänzen, damit die generierte Software als mobile Applikation funktionsfähig und ausführbar ist.

Die Verbindungspunkte CP umfassen User-Interface-Verbindungspunkt UI-CP, Sicherheits-Verbindungpunkte S-CP, Hardware-Abhängigkeits-Verbindungspunkte HWD-CP, Gerätefunktions-Verbindungspunkte DF-CP sowie Deployment-Verbindungspunkte D-CP.

Die Links selbst werden vom Linker-Modul LM mit Hilfe verschiedener Linker hergestellt. Der User-Interface-Linker UI-L verbindet das Applikations-Skelett APPSK via User-Interface-Verbindungspunkten UI-CPs mit den User-Interface-Komponenten UIC, die durch ein User-Interface-Generierungssystem UIGS erzeugt wurden. Anschließend hat die mobile Applikation MAPP ein User-Interface. Das User-Interface-Generatorsystem UIGS ist Bestandteil des Code-Generatorsystems CGS. Durch das User-Interface-Generatorsystem UIGS werden User-Interface-Komponenten erzeugt, insbesondere die User-Interface-Struktur der mobilen Applikation sowie das User-Interface für Funktionen der mobilen Applikation einschließlich des jeweils zugehörigen User-Interface-Codes.

Der Gerätefunktions-Linker DF-L verbindet vorhandene Funktions-Komponenten, wie spezielle Protokolle wie z.B. CodeSys über den Gerätefunktions-Verknüpfungspunkt DF-CP mit dem Applikations-Skelett bzw. dem erweiterten Applikations-Skelett. Die Sicherheits-Verbindungspunkte S-CP werden mit Sicherheits-Komponenten wie Zertifikaten durch den Sicherheits-Linker S-L verbunden. Die Hardwareabhängigkeits-Verbindungspunkte HWD-CP werden durch den Hardwareabhängigkeits-Linker HWD-L zu besonderen Hardwareteilen mobiler Geräte gelinkt. Dadurch wird die mobile Applikation befähigt, insbesondere mobile Hardware wie z.B. Kameras oder Funk-Netzwerke zu benutzen.

Auch kann es notwendig sein, das erweitere Applikations-Skelett EAPPSK oder die kompilierte Applikation CAPP mit speziellen Deployment-Informationen und Deployment-Funktionalitäten anzureichern.. Dies wird durch den Deployment-Linker D-L erreicht; er verbindet über Deployment-Verbindungspunkte D-CP das EAPPSK oder CAPP mit für das Deployment der mobilen Applikation benötigten Deployment-Komponenten wie spezifischen Deployment-Funktionen für Android- oder iOS-basierte mobile Applikationen.

Sämtliche Artefakte bzw. Komponenten, die nicht durch den Codegenerator erzeugt werden, jedoch über einen Verbindungspunkt verknüpft sind, können von den internen oder externen Datenspeichern DS1, DS2 geladen werden.

## Patentansprüche

1. Computerimplementiertes Verfahren zur Bereitstellung eines Bedienprogramms in Form einer auf einem mobilen Gerät (MD) lauffähigen mobilen Applikation (MAPP) zur Interaktion wie Bedienung, Überwachung, Konfiguration und/oder Diagnose mit einem Anwendungs-Programm (DA) eines Automatisierungsgerätes (D) zur Steuerung und/oder Überwachung einer Maschine (M) oder Anlage,
**dadurch gekennzeichnet,**
**dass** die mobile Applikation (MAPP) aus einer Anwendungs-Beschreibung (DAD) des Anwendungs-Programms (DA) des Automatisierungsgerätes generiert wird, wobei die Anwendungs-Beschreibung (DAD) des Anwendungs-Programms (DA) in ein Applikations-Generatorsystem (APPGS) geladen wird,
wobei die Anwendungs-Beschreibung (DAD) hinsichtlich ihrer Struktur und ihres Inhalts analysiert und in Segmente zerlegt wird,
wobei aus den Segmenten der Anwendungs-Beschreibung (DAD) Komponenten-Beschreibungen (UICD, DCD, FCD, STCD) erzeugt und diejenigen Komponenten-Beschreibungen (UICD, DCD, FCD, STCD) durch einen Anwender ausgewählt werden, die für die Interaktion der mobilen Applikation (MAPP) mit dem auf dem Automatisierungsgerät (D) laufenden Anwendungs-Programm (DA) erforderlich sind,
wobei die Komponenten-Beschreibungen (UICD, DCD, FCD, STCD) hinsichtlich anwendungsspezifischer Software-Artefakte (ADSI) und/oder mobilgerätespezifischer Software-Artefakte (MDSA) analysiert werden,
wobei für die automatische Generierung der mobilen Applikation (MAPP) notwendige anwendungsspezifische Software-Artefakte (ADSI, EOBJ, EMOD, ECOM, ESERV) und/oder für die Generierung der mobilen Applikation (MAPP) notwendige mobilgerätespezifische Software-Artefakte (MDSA, MDR, MDEP) ausgewählt und aus einem Datenspeicher (DS1, DS2) geladen werden,
wobei aus den ausgewählten und geladenen anwendungsspezifischen Software-Artefakten (ADSA, EOBJ, EMOD, ECOM, ESERV) und/oder den ausgewählten und geladenen mobilgerätespezifischen Software-Artefakten (MDSA, MDR, MDEP) Applikations-Komponenten (MUIC, MDC, MFC, MSTC) erzeugt werden und
wobei aus den Applikations-Komponenten (MUIC, MDC, MFC, MSTC) ein auf dem mobilen Gerät ausführbarer Source-Code für die mobile Applikation (MAPP) generiert wird.

2. Verfahren nach Anspruch 1,
**dadurch gekennzeichnet,**
**dass** die für die Generierung notwendigen anwendungsspezifischen Software-Artefakte (ADSI) in Form von Objekten (EOBJ), Modulen (EMOD), Komponenten (ECOM) oder Services (ESERV) in dem Datenspeicher (DS1, DS2) gespeichert sind und/oder dass die für die Generierung notwendigen mobilgerätespezifischen Software-Artefakte (MDSA) in Form von Deployment-Regeln (MDR) oder Abhängigkeiten (MDEP) zwischen der zu erstellenden mobilen Applikation (MAPP) und einem Betriebssystem sowie einer Hardware des mobilen Gerätes (MG) in dem Datenspeicher (DS1, DS2) gespeichert sind.

3. Verfahren nach Anspruch 1 oder 2,
**dadurch gekennzeichnet,**
**dass** bei der Analyse der Anwendungs-Beschreibung (DAD) eine Applikations-Struktur der mobilen Applikation (MAPP), ein Applikations-Typ eine Applikations-Umgebung und/oder Linker-Details abgeleitet werden, wobei aus der Applikations-Struktur ein zunächst leeres Applikations-Skelett (APPSK) erzeugt wird und dass in Abhängigkeit des Applikations-Skeletts (APPSK) und den Komponenten-Beschreibungen (UICD, DCD, FCD, STCD) Konfigurations-Dateien für die Applikations-Komponenten (MUIC, MDC, MFC, MSTC) erzeugt werden.

4. Verfahren nach zumindest einem der vorhergehenden Ansprüche,
**dadurch gekennzeichnet,**
**dass** der ausführbare Code der mobilen Applikation (MAPP) durch verlinken der Applikations-Komponenten (MUIC, MDC, MFC, MSTC) mit dem Applikations-Skelett erzeugt wird.

5. Verfahren nach zumindest einem der vorhergehenden Ansprüche,
**dadurch gekennzeichnet,**
**dass** bei der Generierung der mobilen Applikation (MAPP) anwenderspezifische Informationen (CSI) wie Firmenidentität, Herstellername oder Anwendername und/oder mobilgerätespezifische Informationen (MDI) wie Informationen betreffend die Hardware (MHWI) oder betreffend das mobile Betriebssystem (MOSI) durch eine Eingabeaufforderung abgefragt oder aus der Anwendungs-Beschreibung (DAD) oder aus dem mobilen Gerät (MD) bei Verbindung mit dem Applikations-Generatorsystem (APPGS) ausgelesen werden.

6. Verfahren nach zumindest einem der vorhergehenden Ansprüche,
**dadurch gekennzeichnet,**
**dass** diejenigen Komponenten-Beschreibungen (UICD, DCD, FCD, STCD) durch einen Anwender ausgewählt werden, durch die User-Interfaces, Funktionen, Daten und/oder Strukturen beschrieben werden.

7. Verfahren nach zumindest einem der vorhergehenden Ansprüche,
**dadurch gekennzeichnet,**
**dass** die Komponenten-Beschreibungen (UICD, DCD, FCD, STCD) zumindest eine User-Interface-Komponenten-Beschreibung (UICD), eine Daten-Komponenten-Beschreibung (DCD), eine Funktions-Komponenten-Beschreibung sowie Struktur-Komponenten-Beschreibung (STCD) umfassen.

8. Verfahren nach einem der vorhergehenden Ansprüche,
**dadurch gekennzeichnet,**
**dass** als Anwendungs-Beschreibung (DAD) des Anwendungs-Programms (DA) eine XML-Beschreibung verwendet wird.

9. Applikations-Generatorsystem, das dazu eingerichtet ist, ein Verfahren gemäß eines der Ansprüche 1 bis 8 auszuführen.

## Claims

1. A computer implemented process for providing an operating program in the form of a mobile application (MAPP) that is executable on a mobile device (MD) for interactions such as operation, monitoring, configuration and/or diagnosis, with an application program (DA) of an automation device (D) for the operation and/or monitoring of a machine (M) or installation, **characterized by** the fact,
that the mobile application (MAPP) is generated from an application description (DAD) of the application program (DA) of the automation device;
wherein the application description (DAD) of the application program (DA) is loaded in an application generator system (APPGS); wherein the application description (DAD) is analyzed as regards its structure and its contents, and is broken down in segments;
wherein component descriptions (UICD, DCD, FCD, STCD) are created out of the segments of the application description, and the component-descriptions (UICD, DCD, FCD, STCD) are selected by a user, which are necessary for the interaction of the mobile application with the application program (DA) running on the automation device (AD),
wherein the component descriptions (UICD, DCD, FCD, STCD) are analyzed as regards the application-specific software artifacts (ADSI) and/or mobile-device-specific software artifacts, including at least deployment rules (MDR) or dependency (MDEP);
wherein the application-specific software artifacts (EOBJ, EMOD, ECOM, ESERV) necessary for the automatic generation of the mobile application (MAPP) and/or the mobile-device-specific software artifacts (MDSR, MDEP) necessary for the automatic generation of the mobile application (MAPP) are selected and are downloaded from storage (DS1, DS2); wherein application components (MUIC, MDC, MFC, MSTC) are created from the selected and loaded application-specific software artifacts (EOBJ, EMOD, ECOM, ESERV) and/or the selected and loaded mobile-device-specific software artifacts (MDR, MDEP) and wherein a source code for the mobile application, executable on the mobile device, is generated out of the application components (MUIC, MDC, MFC, MSTC).

2. Process according to Claim 1,
**characterized by** the fact,
that the necessary application-specific software artifacts (ADSI) in form of objects (EOBJ), modules (EMOD), components (ECOM) or services (ESERV) are stored in the storage (DS1, DS2) and/or that the mobile-device-specific software artefacs (MDSA) in the form of deplayment rules (MDR) or dependency (MDEP) between the mobile application (MAPP) to generate and an operating system and a hardware of the mobile device (MD) are stored in the storage (DS1, DS2).

3. Process according to claim 1 or 2,
**characterized by** the fact,
that during the analysis of the application description (DAD), an application structure of the mobile application (MAPP), an application type, an application environment and/or linker details are derived, whereby an initially empty application skeleton (APPSK) is created out of the application structure; and that configuration files for the application components (MUIC, MDC, MFC, MSTC) are created in dependence of the application skeleton (APPSK) and of the component descriptions (UICD, DCD, FCD, STCD).

4. Process according to at least one of the preceding claims,
**characterized by** the fact,
that the executable code of the mobile application (MAPP) is created through a linking of the application components (MUIC, MDC, MFC, MSTC) with the application skeleton.

5. Process according to at least one of the preceding claims,
**characterized by** the fact,
that during the generation of the mobile application (MAPP) user-specific information (CSI) such as corporate identity, manufacturer name or user name and/or mobile-device-specific information (MDI) such as information relating to the hardware (MHWI) or relating to the mobile operating system (MOSI) are requested by an input prompt or are read from the application description (DAD) or from the mobile device (MD) in the case of linking with the application generator system (APPGS).

6. The Process according to at least one of the preceding claims,
**characterized by** the fact,
that those component descriptions (UICD, DCD, FCD, STCD) are selected by a user, which describes the user interfaces, functions, data and/or structures.

7. Process according to at least one of the preceding claims,
**characterized by** the fact,
that the component descriptions (UICD, DCD, FCD, STCD) include at least one user interface component description (UICD), one data component description (DCD), one function component description as well as a structure component description (STCD).

8. Process according to at least one of the preceding claims,
**characterized by** the fact,
that an XML description is used as the application description (DAD) of the application program (DA).

9. Application-Generate-System, which is designed to perform a process according to one of the claims 1 to 8.

## Revendications

1. Procédé implémenté par ordinateur pour fournir un programme de commande sous forme d'une application mobile (MAPP) exécutable sur un appareil mobile (MD), destiné à une interaction telle que commande, surveillance, configuration et/ou diagnostic avec un programme d'application (DA) d'un appareil d'automatisation (D) pour la commande et/ou la surveillance d'une machine (M) ou d'une installation,
**caractérisé en ce**
**que** l'application mobile (MAPP) est générée à partir d'une description d'application (DAD) du programme d'application (DA) de l'appareil d'automatisation,
sachant que la description d'application (DAD) du programme d'application (DA) est chargée dans un système générateur d'application (APPGS),
sachant que la description d'application (DAD) est analysée au niveau de sa structure et de son contenu, et décomposée en segments,
sachant qu'à partir des segments de la description d'application (DAD) sont créées des descriptions de composants (UICD, DCD, FCD, STCD) et qu'un utilisateur sélectionne les descriptions de composants (UICD, DCD, FCD, STCD) qui sont nécessaires pour l'interaction de l'application mobile (MAPP) avec le programme d'application (DA) fonctionnant sur l'appareil d'automatisation (D),
sachant que les descriptions de composants (UICD, DCD, FCD, STCB) sont analysées concernant les artéfacts logiciels spécifiques à l'application (AJDSI) et/ou les artéfacts logiciels spécifiques à l'appareil mobile (MDSA),
sachant que des artéfacts logiciels spécifiques à l'application (ADSI, EOBJ, EMOD, ECOM, ESERV), nécessaires à la génération automatique de l'application mobile (MAPP) et/ou des artéfacts logiciels spécifiques à l'appareil mobile (MDSA, MDR, MDEP) nécessaires à la génération de l'application mobile (MAPP) sont sélectionnés et chargés à partir d'une mémoire de données (DS1, DS2).
sachant qu'à partir des artéfacts logiciels spécifiques à l'application (ADSA, EOBJ, EMOD, ECOM, ESERV) sélectionnés et chargés et/ou à partir des artéfacts logiciels spécifiques à l'appareil mobile (MDSA, MDR, MDEP) sélectionnés et chargés sont créés des composants d'application (MUIC, MDC, MFC, MSTC) et
sachant qu'à partir des composants d'application (MUIC, MDC, MFC, MSTC) est généré pour l'application mobile (MAPP) un code source exécutable sur l'appareil mobile.

2. Procédé selon la revendication 1,
**caractérisé en ce**
**que** les artéfacts logiciels spécifiques à l'application (ADSI) nécessaires à la génération sont enregistrés dans la mémoire de données (DS1, DS2), sous forme d'objets (EOBJ), de modules (EMOD), de composants (ECOM) ou de services (ESERV) et/ou que les artéfacts logiciels spécifiques à l'appareil mobile (MDSA) nécessaires à la génération sont enregistrés dans la mémoire de données (DS1, DS2), sous forme de règles de déploiement (MDR) ou de dépendances (MDEP) entre l'application mobile (MAPP) à créer et un système d'exploitation ainsi qu'un matériel de l'appareil mobile (MG).

3. Procédé selon la revendication 1 ou 2,
**caractérisé en ce**
**que** lors de l'analyse de la description d'application (DAD), une structure d'application de l'application mobile (MAPP), un type d'application, un environnement d'application et/ou des détails d'éditeur de liens en sont déduits, sachant qu'à partir de la structure d'application est créé un squelette d'application (APPSK) vide tout d'abord et que selon le squelette d'application (APPSK) et les descriptions de composants (UICD, DCD, FCD, STCD) sont créés des fichiers de configuration pour les composants d'application (MUIC, MDC, MFC, MSTC).

4. Procédé selon au moins une des revendications précédentes,
**caractérisé en ce**
**que** le code exécutable de l'application mobile (MAPP) est généré par la création de liens entre les composants d'application (MUIC, MDC, MFC, MSTC) et le squelette d'application.

5. Procédé selon au moins une des revendications précédentes,
**caractérisé en ce**
**que** lors de la génération de l'application mobile (MAPP), des informations spécifiques à l'utilisateur (CSI), telles qu'identité de l'entreprise, nom du fabricant ou nom d'utilisateur, et/ou des informations spécifiques à l'appareil mobile (MDI), telles que des informations concernant le matériel (MHWI) ou concernant le système d'exploitation mobile (MOSI), sont demandées par une invite de saisie ou lues à partir de la description d'application (DAD) ou de l'appareil mobile (MD) lors de la connexion au système générateur d'application (APPGS).

6. Procédé selon au moins une des revendications précédentes,
**caractérisé en ce**
**qu'**un utilisateur sélectionne les descriptions de composants (UICD, DCD, FCD, STCD) au moyen desquelles des interfaces utilisateur, fonctions, données et/ou structures sont décrites.

7. Procédé selon au moins une des revendications précédentes,
**caractérisé en ce**
**que** les descriptions de composants (UICD, DCD, FCD, STCD) comprennent au moins une description de composant d'interface utilisateur (UICD), une description de composant de données (DCD), une description de composant de fonction ainsi qu'une description de composant de structure (STCD).

8. Procédé selon au moins une des revendications précédentes,
**caractérisé en ce**
**qu'**une description XML est utilisée comme description d'application (DAD) du programme d'application (DA).

9. Système générateur d'application qui est configuré pour exécuter un procédé conformément à une des revendications 1 à 8.
